(19) Europäisches Patentamt / European Patent Office / Office européen des brevets

(11) **EP 2 372 480 B1**

(12) **EUROPÄISCHE PATENTSCHRIFT**

(45) Veröffentlichungstag und Bekanntmachung des Hinweises auf die Patenterteilung:
**22.01.2020 Patentblatt 2020/04**

(51) Int Cl.:
*G05B 23/02* *(2006.01)*      *G05B 13/02* *(2006.01)*

(21) Anmeldenummer: **11002340.5**

(22) Anmeldetag: **22.03.2011**

(54) **Verfahren zur Regelung unter Verwendung eines neuronalen Netzes und Einrichtung hierzu**

Regulation method and device using a neuronal network

Procédé de réglage utilisant un réseau neuronal et dispositif associé

(84) Benannte Vertragsstaaten:
**DE FR GB**

(30) Priorität: **24.03.2010 DE 102010012682**

(43) Veröffentlichungstag der Anmeldung:
**05.10.2011 Patentblatt 2011/40**

(73) Patentinhaber: **Institut Franco-Allemand de Recherches de Saint-Louis**
**68301 Saint-Louis Cedex (FR)**

(72) Erfinder:
• **Eichhorn, Marc, D.**
  **79736 Rickenbach (DE)**
• **Raymond, Pierre F.**
  **68990 Heimsbrunn (FR)**
• **Pichler, Alexander D.**
  **68720 Tagolsheim (FR)**

(56) Entgegenhaltungen:
• **BOYAGODA P ET AL: "A neural network based positional tracking controller for servo systems", CONFERENCE RECORD OF THE 1999 IEEE INDUSTRY APPLICATIONS CONFERENCE. THIRTY-FORTH IAS ANNUAL MEETING (CAT. NO.99CH36370), IEEE, IEEE PISCATAWAY, NJ, USA, Bd. 4, 3. Oktober 1999 (1999-10-03), Seiten 2380-2385, XP010354998, DOI: 10.1109/IAS.1999.799175 ISBN: 978-0-7803-5589-7**

## Beschreibung

Die Erfindung betrifft ein Verfahren zur Regelung einer Stellgröße unter Verwendung eines auf einem Chip basierenden, neuronalen Netzes. Ferner eine Einrichtung hierzu.

Zum bekannten Stand der Technik gehört eine Dissertation (Titel: "A 3-sided Pyramid Wavefront Sensor controlled by a Neutral Network for Adaptive Optics", von: Cristina Alvazez Diez, Datum: 18. Oktober 2006, Ruperto-Carola University of Heidelberg)." Die Dissertation zeigt ein Verfahren zur Regelung einer Stellgröße, auf die keine zeitabhängigen Störgrößen einwirken. Es wird ein auf einer Software basierendes, neuronales Netz verwendet, das an Sensoren angeschlossen ist. Die Stellgröße ist mehrdimensional. Das neuronale Netz ist auf die Erkennung einer Abweichungsfunktion unter unmittelbarer Abgabe einer Stellfunktion angelernt. Daher ist der Ausgang ebenfalls mehrdimensional.

Die Schritte im Regelungsbetrieb sind:

- Eingabe von Sensordaten in das neuronale Netz,
- das neuronale Netz erkennt eine Abweichungsfunktion und gibt unmittelbar eine Stellfunktion aus,
- direktes Beaufschlagen des Stellgliedes mit dieser Stellfunktion, wobei sich die Regelgröße entsprechend verändert,
- Erhalt neuer Sensordaten, Eingabe dieser Sensordaten in das neuronale Netz, Erhalt einer neuen Stellfunktion und Beaufschlagung des Stellglieds mit der neuen Stellfunktion,
- vielmalige Wiederholung der letztgenannten Schritte.

Das bekannte Verfahren ist nicht dafür geeignet, auf kurzzeitig auftretende Störgrößen zu reagieren. Denn das neuronale Netz ist basierend auf einer Software. Daher wird ein schneller Computer benötigt, welcher das neuronale Netz simuliert. Diese Simulation erfolgt sequenziell und ist daher langsam. Es wird ein hoher Aufwand an Rechenleistung, Anlernungszeit und Speicherbedarf benötigt. Dies führt zu einem hohen Platzbedarf und einem hohen Energiebedarf. Das auf einer Software basierende neuronale Netz ist auf die Erkennung einer Abweichungsfunktion unter unmittelbarer Abgabe einer Stellfunktion angelernt. Das direkte Anlegen einer Stellfunktion auf das Stellglied benötigt eine große Anzahl an anzulernden Störungen. Denn jede Kombination mehrerer Störungen stellt eine neue anzulernende Störung dar, wenn sie erkannt und korrigiert werden soll. Zwar ermöglicht das direkte Anlegen der Stellwerte theoretisch eine sofortige und somit schnelle Korrektur, jedoch ist der Anlern- und Speicheraufwand für die Berücksichtigung der vielen Kombinationen extrem groß. Das Dokument XP010354998 "A neural network based positional tracking controller for servo systems" Boyagoda et al, CONFERENCE RECORD OF THE 1999 IEEE INDUSTRY APPLICATIONS CONFERENCE. THIRTY-FORTH IAS ANNUAL MEETING , IEEE PISCATAWAY, NJ, USA, Seiten 2380 - 2385 beschreibt ein Verfahren zur Regelung einer Stellgrösse.

Der Erfindung liegt daher die Aufgabe zu Grunde, ein Verfahren und eine Einrichtung zur Regelung einer Stellgröße unter Verwendung eines neuronalen Netzes so auszubilden, dass auch bei sich schnell verändernden Störgrößen eine Regelung möglich ist.

Diese Aufgabe wird erfindungsgemäß durch die Merkmale des Anspruches 1 gelöst. Ferner durch die Merkmale des nebengeordneten Anspruches 11.

Die Vorteile der Erfindung liegen darin, dass Stellgrößen geregelt werden können, auf die Störgrößen einwirken, die sich zeitlich sich sehr schnell ändern. Ferner ist die Regelungseinrichtung sehr kompakt aufgebaut.

Das Verfahren und die Einrichtung zur Regelung einer Stellgröße verwenden ein auf einem Chip basierendes, neuronales Netz, das an einen Sensor angeschlossen ist und Zugriff auf eine Datenbank hat. Das neuronale Netz, verkörpert durch den Chip, ermöglicht eine kompakte Gestaltung der Regelungseinrichtung. Dies mit einer Interfaceschaltung. Die Interfaceschaltung verbindet

- das neuronale Netz mit dem Sensor,
- das neuronale Netz mit dem Speicher der Datenbank, und
- den Speicher der Datenbank mit einem Stellglied.

Im Regelungsbetrieb wird das neuronale Netz in einem Erkennungsmodus betrieben. Das neuronale Netz gibt nach Anlegen der Sensordaten innerhalb von nur ca. 10 $\mu$s die Satznummer derjenigen Abweichungsfunktion aus, welche in der gemessenen Abweichung am dominantesten vorkommt. Dies ermöglicht eine sehr schnelle Regelung. Die Stellgröße Ist mehrdimensional. Wie nachfolgend ausgeführt, kann die Stellgröße eine Wellenfront sein, die mehrdimensional ist. Auf die Regelgröße können kurzzeitig Störgrößen einwirken, welche über ein geeignetes Ansteuern des Stellgliedes zu korrigieren sind. Bei den nachfolgend aufgeführten Ausführungsbeispielen liegen die für eine gute Korrektur nötigen Regelfrequenzen bei bis zu mehreren kHz.

Die Datenbank weist Sätze auf, wobei jeder Satz eine Satznummer, Werte einer Abweichungsfunktion und Werte einer Stellfunktion aufweist. Die Satznummer dient zur eindeutigen Identifikation eines Satzes und ist die vom neuronalen Netz gelieferte Antwort im Erkennungsprozess. Die Werte der Abweichungsfunktion sind diejenigen Werte, welche vom neuronalen Netz als Regelabweichung erkannt werden sollen, und worauf das neuronale Netz als Antwort die zugehörige Satznummer ausgibt.

Das neuronale Netz ist auf die Erkennung einer Abweichungsfunktion angelernt, mit folgenden Schritten im Regelungsbetrieb:

- Eingabe von Sensordaten in das neuronale Netz.
- Verarbeitung der Sensordaten im neuronalen Netz, derart, dass durch Erkennen, Klassifizieren und Verallgemeinern eine angelernte Abweichungsfunktion als dominant erkannt wird. Diese dominante Abweichung vom Sollzustand muss als erstes korrigiert werden, da sie im

Allgemeinen die größte Stellgliedveränderung benötigt.

- Ausgabe einer Satznummer der als dominant erkannten Abweichungsfunktion durch das neuronale Netz.
- Abfrage der Datenbank mit der Satznummer der als dominant erkannten Abweichungsfunktion und Erhalt einer Stellfunktion. Dadurch wird die Stellfunktion ermittelt, welche die auftretende Störung zumindest teilweise kompensieren soll.
- Aufaddierung dieser Stellfunktion auf eine bisherige Stellfunktion des Stellgliedes unter Erhalt einer Summen-Stellfunktion und Beaufschlagung des Stellgliedes mit dieser Summen-Stellfunktion, wobei sich die Regelgröße entsprechend verändert. Dadurch wird der Anteil der dominanten Abweichung in der Gesamtabweichung korrigiert.
- Erhalt neuer Sensordaten, Eingabe dieser Sensordaten in das neuronale Netz, Erhalt einer neuen, als dominant erkannten Abweichungsfunktion durch das neuronale Netz, Erhalt einer neuen Stellfunktion aus der Datenbank, Aufaddierung der Stellfunktion und Beaufschlagung des Stellgliedes mit einer neuen Summen-Stellfunktion. Durch diesen Schritt wird im Fall einer Überlagerung mehrerer Störungen die nächste, noch nicht korrigierte Störung ermittelt und korrigiert.
- Vielmalige Wiederholung der letztgenannten Schritte. Dieses iterative Verfahren korrigiert im Fall einer zeitlich wenig veränderlichen Störung nacheinander mit fallender Stärke alle auftretenden Störungen, auch Kombinationen von Störungen, welche als solche nicht direkt angelernt wurden. Dies reduziert die Anzahl der Datensätze und damit den benötigten Speicherplatz. Eine geringe Anzahl von Datensätzen ermöglicht eine schnelle Abfrage der Datenbank. Im Fall einer zeitlich schnell veränderlichen Störung sichert dieses iterative Verfahren, dass immer der dominanteste Störanteil zuerst ausgeregelt wird. Dies sichert eine bestmögliche Korrektureffizienz auch bei schnellen Störungen.

Gemäß einer Ausgestaltung der Erfindung erfolgt vor dem Schritt der Aufaddierung eine Gewichtung der von der Datenbank erhaltenen Stellfunktion. Mit großem Vorteil kommt dies einem fortlaufenden, iterativen Annäherungsverfahren zu Gute. Mit der Gewichtung kann das Regelverhalten oder die iterative Angleichung an einen Soll-Wert sehr einfach und schnell beeinflusst werden.

Gemäß einer Ausgestaltung der Erfindung erfolgt die Gewichtung der von der Datenbank erhaltenen Stellfunktion durch eine Multiplikation mit einem Gewichtungsfaktor. Ein Gewichtungsfaktor ist mathematisch einfach zu realisieren und trotzdem wirkungsvoll in Bezug auf eine Einflussnahme auf das Regelungsverhalten. Durch den Gewichtungsfaktor kann die Konvergenzgeschwindigkeit des Verfahrens extern beeinflusst werden, ohne dabei die Datenbank neu generieren zu müssen. Dies kann bei sich verändernden Einsatzbedingungen mit sich ändernden Störeinflüssen von Vorteil sein. Bei konstanten Einsatzbedingungen kann dieser Faktor aber auch einmalig bestimmt werden. In einem linearen System, bei dem die exakte Abweichungsfunktion gerade die mit minus eins multiplizierte erzeugende Stellfunktion ist, kann ein Gewichtungsfaktor zwischen größer als Null und kleiner als 1 die Konvergenz des Verfahrens verbessern und zum Beispiel eine Selbstoszillation des Regelkreises verhindern. Ein Gewichtungsfaktor von größer als 1 ermöglicht eine Stellfunktion auf das Stellglied benötigt eine große Anzahl an anzulernden Störungen. Denn jede Kombination mehrerer Störungen stellt eine neue anzulernende Störung dar, wenn sie erkannt und korrigiert werden soll. Zwar ermöglicht das direkte Anlegen der Stellwerte theoretisch eine sofortige und somit schnelle Korrektur, jedoch ist der Anlern- und Speicheraufwand für die Berücksichtigung der vielen Kombinationen extrem groß.

Der Erfindung liegt daher die Aufgabe zu Grunde, ein Verfahren und eine Einrichtung zur Regelung einer Stellgröße unter Verwendung eines neuronalen Netzes so auszubilden, dass auch bei sich schnell verändernden Störgrößen eine Regelung möglich ist.

Diese Aufgabe wird erfindungsgemäß durch die Merkmale des Anspruches 1 gelöst. Ferner durch die Merkmale des nebengeordneten Anspruches 12.

Die Vorteile der Erfindung liegen darin, dass Stellgrößen geregelt werden können, auf die Störgrößen einwirken, die sich zeitlich sich sehr schnell ändern. Ferner ist die Regelungseinrichtung sehr kompakt aufgebaut.

Das Verfahren und die Einrichtung zur Regelung einer Stellgröße verwenden ein auf einem Chip basierendes, neuronales Netz, das an einen Sensor angeschlossen ist und Zugriff auf eine Datenbank hat. Das neuronale Netz, verkörpert durch den Chip, ermöglicht eine kompakte Gestaltung der Regelungseinrichtung. Dies mit einer Interfaceschaltung. Die Interfaceschaltung verbindet

- das neuronale Netz mit dem Sensor,
- das neuronale Netz mit dem Speicher der Datenbank, und
- den Speicher der Datenbank mit einem Stellglied.

Im Regelungsbetrieb wird das neuronale Netz in einem Erkennungsmodus betrieben. Das neuronale Netz gibt nach Anlegen der Sensordaten innerhalb von nur ca. 10 μs die Satznummer derjenigen Abweichungsfunktion aus, welche in der gemessenen Abweichung am dominantesten vorkommt. Dies ermöglicht eine sehr schnelle Regelung. Die Stellgröße ist mehrdimensional. Wie nachfolgend ausgeführt, kann die Stellgröße eine Wellenfront sein, die mehrdimensional ist. Auf die Regelgröße können kurzzeitig Störgrößen einwirken, welche über ein geeignetes Ansteuern des Stellfunktion gekoppelt. Die Umrechnung der angelegten Stellgliedfunktion zur korrigierenden Stellfunktion ermöglicht es, dass im Regelungsbetrieb direkt ohne zusätzlichen Rechenaufwand eine korrigierende Stellfunktion ausgegeben wird. Mit einer Wichtung der Stellfunktion kann das Regelverhalten oder die iterative Angleichung an einen Soll-Wert sehr gut beeinflusst werden. Eine Möglichkeit ist zuvor als vorteilhafte Ausgestaltung der Erfindung genannt und ausführlich beschrieben. Dabei geht es um einen zusätzlichen Verfahrensschritt der Wichtung einer von der Datenbank erhaltenen Stellfunktion. Daneben bestehen zwei weitere Möglichkeiten, um eine Wichtung der Stellfunktion vorzunehmen. Diese beziehen sich auf die Datenbank. Die erste Möglichkeit besteht darin, eine Wichtung mit einem Wichtungsfaktor bereits im Rahmen der Erstellung der Datenbank vorzunehmen. In der Datenbank wird die gewichtete Stellfunktion abgespeichert. Die zweite Möglichkeit besteht darin, die in einer Datenbank bereits abgelegten Stellfunktionen neu zu wichten. Die Satznummer und die Abweichungsfunktion bleiben hierbei unverändert. Der Vorteil der ersten und zweiten Möglichkeit besteht darin, dass während des Regelungsverfahren kein zusätzlicher Rechenschritt erforderlich ist, bei dem eine Stellfunktion mit einem Gewichtungsfaktor zu multiplizieren ist. Dies kommt der Schnelligkeit des Regelungsverfahrens zu Gute.

Gemäß einer Ausgestaltung der Erfindung erfolgt vor einem Regelungsbetrieb und nach einer Erstellung der Datenbank eine Anlernung des neuronalen Netzes mit folgenden Schritten:

- Auswahl eines Datensatzes der Datenbank,
- Beaufschlagung des neuronalen Netzes zur Anlernung mit der abgespeicherten Abweichungsfunktion des ausgewählten Datensatzes und mit der Satznummer des ausgewählten Datensatzes,
- Wiederholung der vorgenannten Schritte.

Dadurch wird das neuronale Netzwerk angelernt, auf eine Abweichungsfunktion mit der Satznummer derjenigen angelernten Abweichungsfunktion zu antworten, welche die reale Abweichung dominiert und diese somit mit nur einer Funktion am besten beschreibt.

Gemäß einer Ausgestaltung sind die Stellgröße eine Wellenfront, der Sensor ein Wellenfrontsensor und das Stellglied ein deformierbarer Spiegel. Dies bedeutet, dass eine Regelung auf dem Gebiet der adaptiven Optik vorliegt. Hierfür eignet sich das Regelungsverfahren besonders gut.

Gemäß einer Ausgestaltung wird die Wellenfront eines Laserstahls geregelt und der verformbare Spiegel ist einer der beiden Spiegel eines Resonators eines Lasermediums. Dies bedeutet, dass auf dem Gebiet der adaptiven Optik eine interne Korrektur von thermo-optischen Effekten in Lasern, insbesondere in Festkörperlasern, vorgenommen wird. Ein deformierbarer Spiegel wird als Stellglied eingesetzt, um die Strahlqualität des erzeugten Laserstrahls zu verbessern und von thermischen Verzerrungen im Lasermedium unabhängig zu machen.

Gemäß einer Ausgestaltung wird der Wellenfrontsensor von einem Teilstrahl des aus dem Resonator austretenden Laserstrahls beaufschlagt. Dies ist notwendig für das iterative Regelungsverfahren. Hierbei wird fortlaufend der zuvor durch das Stellglied korrigierte Laserstrahl auf Abweichungen der Wellenfront untersucht und bei Vorliegen einer Abweichung wiederum korrigiert. Kurzzeitige Störungen werden erfasst und korrigiert.

Gemäß einer Ausgestaltung wird die Wellenfront erhaltener Teleskopstrahlen geregelt. Der verformbare Spiegel ist im Strahlengang zwischen Teleskop und einer Anzeigevorrichtung angeordnet. Dies bedeutet, dass auf dem Gebiet der adaptiven Optik die Bildqualität von Bodenteleskopen verbessert wird, wobei der Störeinfluss durch atmosphärische Turbulenzen verringert wird. Eine Anwendung liegt in der Übertragung eines Laserstrahls von einem Satelliten auf eine Bodenstation der Erde. Eine andere Anwendung liegt in der Astronomie.

Gemäß einer Ausgestaltung wird der Wellenfrontsensor von einem Teilstrahl des korrigierten Teleskopstrahls beaufschlagt. Das Stellglied korrigiert den Teleskopstrahl. Dann untersucht der Wellenfrontsensor die Wellenfront des korrigierten Teleskopstrahls auf Abweichungen. Wenn diese vorliegen, wird erneut korrigiert. Die Iteration erfolgt fortlaufend. Kurzzeitige Störungen werden erfasst und korrigiert.

Ausführungsbeispiele der Erfindung werden nachfolgend an Hand der Zeichnungen beschrieben. Hierbei zeigen

Fig. 1 eine Schemaskizze einer Regelung unter Verwendung eines auf einem Chip basierenden, neuronalen Netzes, illustriert ist der Regelungsbetrieb.

Fig. 2 eine Schemaskizze, illustriert ist eine Datenbankgenerierung.

Fig. 3 eine Schemaskizze, illustriert ist eine Anlernung des neuronalen Netzes.

Fig. 4 eine Schemaskizze, illustriert ist eine Regelungseinrichtung zur Regelung einer Wellenfront eines Laserstrahls.

Fig. 5 eine Schemaskizze, illustriert ist eine Regelungseinrichtung zur Regelung einer Wellenfront erhaltener Strahlen eines Teleskops.

Fig. 6 eine Schemaskizze einer Regelung, die zusätzlich gegenüber der in Fig. 1 gezeigten Schemaskizze eine Schleife zur Generierung einer verfeinerten Stellfunktion aufweist.

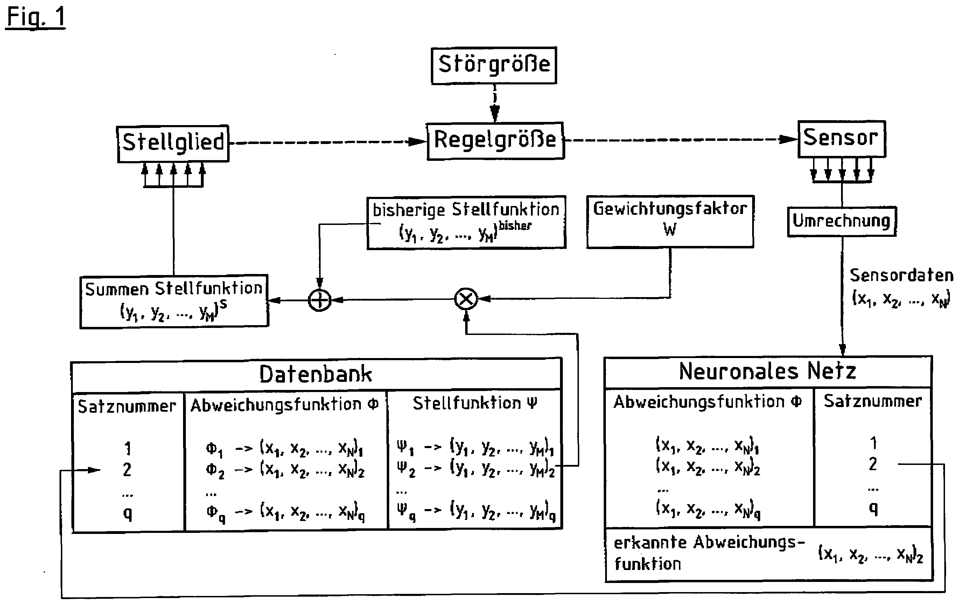

Die Fig. 1 illustriert ein Verfahren und eine Einrichtung zur Regelung einer Stellgröße unter Verwendung eines auf einem Chip basierenden, neuronalen Netzes. Die Stellgröße ist mehrdimensional. Auf die Regelgröße sind kurzzeitig Störgrößen einwirkbar. Die Datenbank weist Sätze auf, wobei jeder Satz eine Satznummer, Werte einer Abweichungsfunktion und Werte einer Stellfunktion aufweist.

Die Abweichungsfunktionen können Eigenfunktionen der Regelstrecke sein, welche die vom Sensor gelieferten Daten mathematisch am einfachsten beschreiben. Die Stellfunktionen können Eigenfunktionen des Stellgliedes sein, welche das Stellglied am einfachsten ansteuern. Dies ergibt einfach aufgebaute Datensätze.

Das neuronale Netz ist auf die Erkennung einer Abweichungsfunktion angelernt. Die Schritte im Regelungsbetrieb sind:

- Eingabe von Sensordaten in das neuronale Netz. Wie dargestellt, handelt es sich bei den Sensordaten um Sensorrohdaten, die umgerechnet wurden. Die Umrechnung der Sensorrohdaten dient der Anpassung des Datenformats des Sensors an das Datenformat des neuronalen Netzes. Eine Umrechnung erübrigt sich, wenn das Datenformat eines Sensors mit dem Datenformat eines neuronalen Netzes übereinstimmt.

- Verarbeitung der Sensordaten im neuronalen Netz, derart, dass durch Erkennen, Klassifizieren und Verallgemeinern eine angelernte Abweichungsfunktion $\phi$ als dominant erkannt wird. Dies kann eine der Abweichung am nächsten liegende Eigenfunktion der Regelstrecke sein, die durch einen Vektor $(x_1, x_2, ..., x_N)_q$ beschrieben sein kann. Im Beispiel nach Fig. 1 ist die erkannte Abweichungsfunktion die Funktion $(x_1, x_2, ..., x_N)_2$.

- Das neuronale Netzwerk gibt die Satznummer q der als dominant erkannten Abweichungsfunktion an. Im Beispiel nach Fig. 1 ist die angegebene Satznummer q die Satznummer 2.

- Abfrage der Datenbank mit der Satznummer 2 der als dominant erkannten Abweichungsfunktion $\phi_2$ und Erhalt einer Stellfunktion $\psi_2$. Allgemein ausgedrückt, findet man in der Datenbank unter einer Satznummer die benötigte Stellfunktion. Die Stellfunktion $\psi$ ist gegeben durch den Vektor $(y_1, y_2, ..., y_M)_q$.

- Gewichtung der von der Datenbank erhaltenen Stellfunktion. Die Gewichtung verbessert die Konvergenz des Verfahrens. Eine Gewichtung erfolgt dadurch, dass die gefundene Stellfunktion $(y_1, y_2, ..., y_M)_2$ mit einem Gewichtungsfaktor w multipliziert wird.

- Aufaddierung dieser gewichteten Stellfunktion $w * (y_1, y_2, ..., y_M)_2$ auf die bisherige Stellfunktion $(y_1, y_2, y_M)^{bisher}$ des Stellgliedes unter Erhalt einer Summen-Stellfunktion $(y_1, y_2, ..., Y_M)^S$.

$$(y_1, y_2, ..., y_M)^S = (y_1, y_2, ..., y_M)^{bisher} + w * (y_1, y_2, ..., y_M)_2$$

- Beaufschlagung des Stellgliedes mit dieser Summen-Stellfunktion, wobei sich die Regelgröße entsprechend verändert. Erhalt neuer Sensordaten, Eingabe dieser Sensordaten in das neuronale Netz, Erhalt einer neuen, als dominant erhaltenen Abweichungsfunktion durch das neuronale Netz, Erhalt einer neuen Stellfunktion aus der Datenbank, Gewichtung, Aufaddierung der gewichteten Stellfunktion und Beaufschlagung des Stellgliedes mit der neuen Summen-Stellfunktion. Die Zyklusgeschwindigkeit, mit der sich das Verfahren wiederholt, wird durch die Messzeit des Sensors, die Erkennungszeit des neuronalen Netzes sowie durch die Zeitverzögerung bei der Datenbankabfrage und der Beaufschlagung des Stellglieds mit der neuen Stellfunktion bestimmt.

- Vielmalige Wiederholung der letztgenannten Schritte. Dies bedeutet, dass die letztgenannten Schritte solange auszuführen sind, bis entweder die Abweichungsfunktion null ist oder eine externe Abbruchbedingung erfüllt ist. Oder die letztgenannten Schritte werden fortlaufend fortgesetzt.

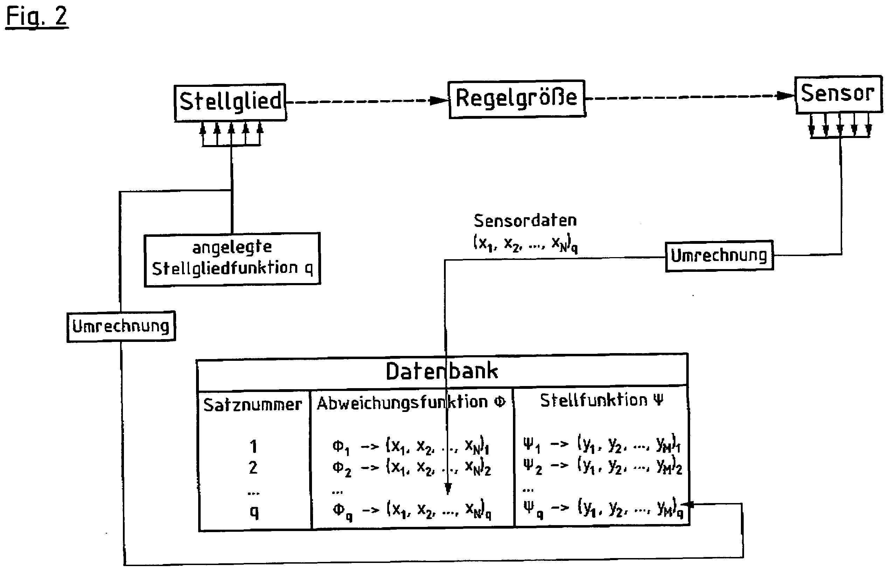

Die Fig. 2 illustriert die Generierung der Datenbank. Die Datenbank wird bei offener Regelschleife ohne einen Störgrößeneinfluss generiert, bevor der Regelungsbetrieb stattfindet. Die Schritte sind:

- Anlegung einer neuen Stellgliedfunktion an das Stellglied,
- Erfassung von neuen Sensordaten, die einer Abweichungsfunktion entsprechen,
- Eintrag der Abweichungsfunktion und einer zugehörigen, korrigierenden Stellfunktion, die durch eine Umrechnung der Stellgliedfunktion erhalten ist, in die Datenbank,
- Wiederholung der vorgenannten Schritte.

Dies ist in Fig. 2 bezüglich des Satzes der Satznummer q dargestellt. Die Umrechnung der angelegten Stellgliedfunktion q zur korrigierenden Stellfunktion $\psi_q$ ermöglicht es, dass im Regelungsbetrieb direkt eine korrigierende Stellfunktion $\psi_q$ ausgegeben wird. In Fig. 2 werden Sensorrohdaten erst umgerechnet, um die Sensordaten zu erhalten. Diese Umrechnung ist erforderlich, falls das Datenformat des Sensors an das Datenformat des neuronalen Netzes anzupassen ist.

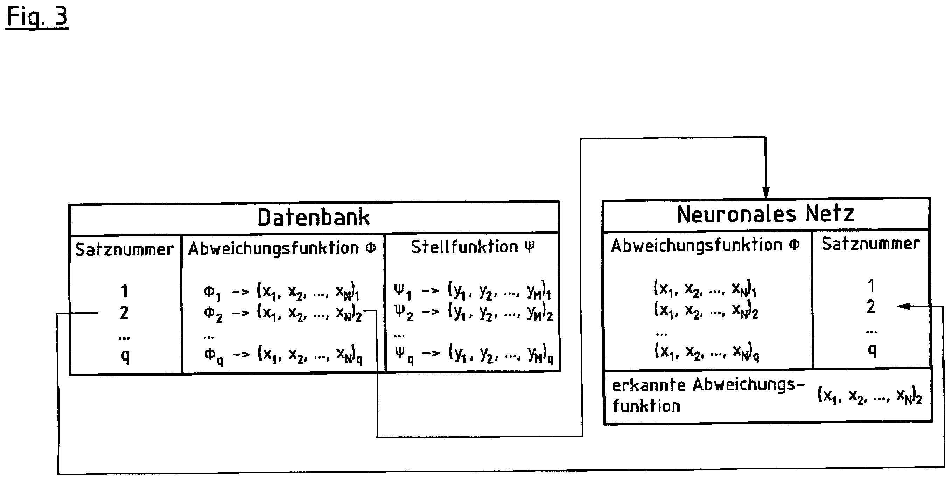

Die Fig. 3 illustriert eine Anlernung des neuronalen Netzes. Vor einem Regelungsbetrieb und nach einer Erstellung der Datenbank erfolgt eine Anlernung des neuronalen Netzes, mit folgenden Schritten:

- Auswahl eines Datensatzes der Datenbank, gemäß dem Beispiel nach Fig. 3 ist dies der Datensatz der Satznummer 2.
- Beaufschlagung des neuronalen Netzes zur Anlernung mit der abgespeicherten Abweichungsfunktion, gemäß dem Beispiel nach Fig. 3 ist dies die Abweichungsfunktion $\phi_2$, und mit der zugehörigen Satznummer, im dargestellten Beispiel ist dies die Satznummer 2.
- Wiederholung der vorgenannten Schritte.

Nachfolgend wird näher auf die Einrichtung eingegangen. Die Einrichtung zur Regelung einer Stellgröße ist mit einem auf einem Chip basierenden, neuronalen Netz ausgestattet. Bei dem Chip handelt es sich um einen Chip mit der Bezeichnung CogniMem der Fa. Recognetics aus China. Das neuronale Netz ist an einen Sensor angeschlossen und hat Zugriff auf eine in einem Speicher abgelegte Datenbank. Die Datenbank ist in einem Flash- oder SD-RAM-Speicher abgelegt. Eine Interfaceschaltung verbindet

- das neuronale Netz mit dem Sensor,
- das neuronale Netz mit dem Speicher der Datenbank, und
- den Speicher der Datenbank mit einem Stellglied.

Die Interfaceschaltung ist FPGA-implementiert. Die Interfaceschaltung ist zur Durchführung des Regelungsverfahrens und der Verfahren zur Datenbankgenerierung und Anlernung ausgebildet. Einzelheiten hierzu sind:
Die Interfaceschaltung umfasst programmierbare Rechenelemente. Mit Hilfe der programmierbaren Rechenelemente erfolgt die zuvor angesprochene Umrechnung von erhaltenen Sensorrohdaten in Sensordaten, um eine Anpassung an das Datenformat des neuronalen Netzes vorzunehmen. In der Interfaceschaltung werden ebenfalls mit programmierbaren Rechenelementen auch die folgenden Schritte durchgeführt:

- Im Regelungsverfahren: Die Gewichtung der von der Datenbank erhaltenen Stellfunktion.
- Im Regelungsverfahren: Die Aufaddierung dieser Stellfunktion auf eine bisherige Stellfunktion des Stellgliedes unter Erhalt einer Summen-Stellfunktion.
- Im Verfahren der Datenbankgenerierung: Die Umrechnung der Stellgliedfunktion, um eine korrigierende Stellfunktion für den Datenbankeintrag zu erhalten.

Das Verfahren zur Regelung eignet sich besonders für eine technische Anwendung auf dem Gebiet der adaptiven Optik. Die Stellgröße ist eine Wellenfront, der Sensor ein Wellenfrontsensor und das Stellglied ein deformierbarer Spiegel. Ein deformierbarer Spiegel weist viele Aktuatoren auf. An jeden Aktuator des deformierbaren Spiegels ist ein Spannungswert anzulegen. Die Abweichung vom Sollzustand, einer planen Wellenfront, ist eine mehrdimensionale Größe. Der Wellenfrontsensor erfasst mehrere Messpunkte der Phasenfrontneigung einer optischen Strahlung.

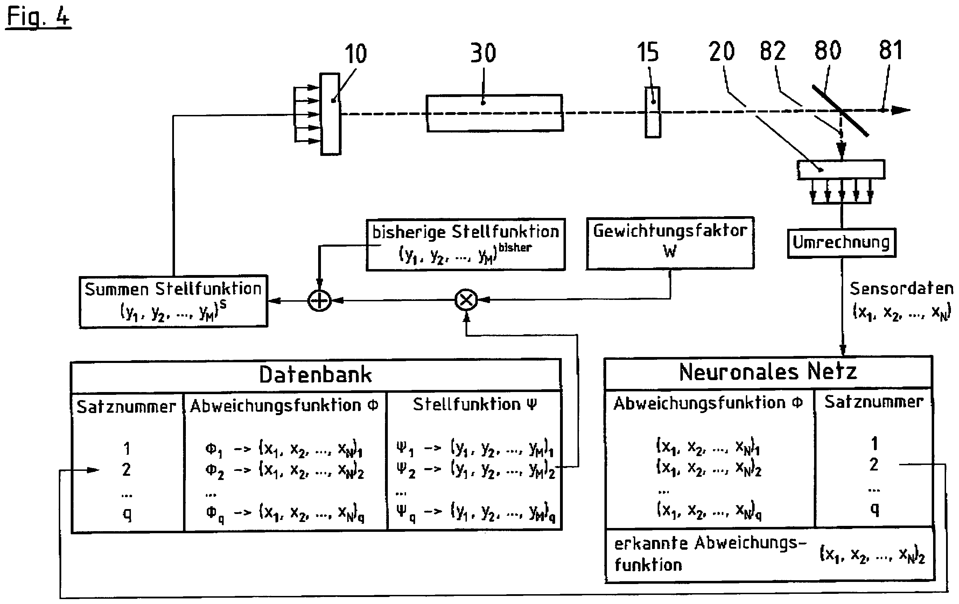

Die Fig. 4 illustriert eine erste Anwendung auf dem Gebiet der adaptiven Optik. Die erste Anwendung baut auf dem allgemeinen Ausführungsbeispiel nach den Figuren 1 bis 3 auf. Die erste Anwendung betrifft eine Regelung der Wellenfront eines Laserstahls. Hierbei ist ein deformierbarer Spiegel einer der beiden Spiegel eines Resonators eines Lasermediums. Dies wird ausführlicher beschrieben. Das Lasermedium 30 ist innerhalb des Resonators angeordnet. Der erste Spiegel des Resonators ist das zuvor erwähnte Stellglied, das der zuvor erwähnte deformierbare Spiegel 10 ist. Der zweite Spiegel des Resonators ist ein Resonator-Auskoppelspiegel 15. Der zuvor erwähnte Wellenfrontsensor 20 ist ein Shack-Hartmann-Sensor. Der Shack-Hartmann-Sensor benutzt eine Linsenarray, welches in der Fokusebene ein Punktgitter erzeugt. Die Verschiebung eines Punktes des Punktgitters aus seiner Referenzposition ist ein Maß für die lokale Phasenfontneigung. Der Wellenfrontsensor 20 wird von einem ausgekoppelten Teilstrahl 82 des korrigierten Laserstahls beaufschlagt. Hierzu dient ein Strahlteiler 80. Der nutzbare Hauptstrahl 81 des Laserstrahls weist aufgrund der Regelung eine plane Wellenfront auf. Die Aufteilung in einen Teilstrahl 82 und einen Hauptstrahl 81 erfolgt in einem Verhältnis von 1:1000.

Die Regelung erfolgt unter Verwendung eines auf einem Chip basierenden, neuronalen Netzes. Die Stellgröße ist mehrdimensional. An das Stellglied, den deformierbaren Spiegel 10, werden M Spannungswerte angelegt. M ist die Anzahl der Aktuatoren des deformierbaren Spiegels 10.

Im Regelungsbetrieb wirken kurzzeitig Störgrößen auf die Regelgröße ein. Hierbei kann es sich um thermische Fluktuationen im Lasermedium 30 handeln.

Die Datenbank weist Sätze auf, wobei jeder Satz eine Satznummer, Werte einer Abweichungsfunktion und Werte einer Stellfunktion aufweist.

- Die Werte einer Abweichungsfunktion sind im vorliegenden Ausführungsbeispiel Eigenfunktionen der Wellenfrontdarstellung am Laserausgang. Die Eigenfunktionen der Wellenfrontdarstellung sind als Zernike- oder Legendre-Polynome dargestellt.
- Die Stellfunktionen können Eigenfunktionen des Stellgliedes sein. Die Eigenfunktionen des Stellgliedes sind mechanische Deformationsmoden des Stellgliedes, also des deformierbaren Spiegels 10.

Wurde die Datenbank durch Anlegen verschiedener Spannungswerte von Spiegelmoden an den deformierbaren Spiegel 10, dem Stellglied, und Messen der sich dann ergebenden Wellenfrontdaten durch den Wellenfrontsensor 20 generiert, so sind die Einträge der Abweichungsfunktion in der Datenbank nicht notwendigerweise Zernike oder Legendre-Polynome, also keine Eigenfunktionen der Wellenfrontdarstellung. Wurde die Datenbank durch Anlegen verschiedener Spannungswerte an die Aktuatoren des deformierbaren Spiegels 10 dergestalt generiert, dass diese Spannungswerte solange iterativ verändert werden, bis sich am Ausgang, das heißt auf dem Shack-Hartmann Sensor, dem Wellenfrontsensor 20, ein gewünschtes Zernike- oder Legendre-Polynom ergibt, so sind die Einträge der Stellfunktion in der Datenbank nicht notwendigerweise mechanische Deformationsmoden der Spiegeloberfläche des deformierbaren Spiegels 10 .

Das neuronale Netz ist auf die Erkennung einer Abweichungsfunktion angelernt, mit folgenden Schritten im Regelungsbetrieb:

- Eingabe von Sensordaten in das neuronale Netz. Wie dargestellt, handelt es sich bei den Sensordaten um Sensorrohdaten, die umgerechnet wurden. Die Umrechnung der Sensorrohdaten dient der Anpassung des Datenformats des Sensors an das Datenformat des neuronalen Netzes. Die Sensordaten sind x- und y-Abweichungen der Punkte, welche vom Wellenfrontsensor 20, dem Shack-Hartmann-Sensor geliefert werden.
- Verarbeitung der Sensordaten im neuronalen Netz, derart, dass durch Erkennen, Klassifizieren und Verallgemeinern eine angelernte Abweichungsfunktion als dominant erkannt wird. Die angelernte Abweichungsfunktion kann ein Zernike-Polynom sein, das der Abweichung am nächsten liegt. Dargestellt wird ein Zernike-Polynom durch den Vektor $(x_1, x_2, ..., x_N)_q$.
- Ausgabe einer Satznummer der als dominant erkannten Abweichungsfunktion durch das neuronale Netz. Unter dieser Satznummer, im Beispiel ist es die Satznummer 2, findet man in der Datenbank die benötigte Stellfunktion, gegeben durch den Vektor $(y_1, y_2, ..., y_M)_2$.
- Abfrage der Datenbank mit der Satznummer 2 der als dominant erkannten Abweichungsfunktion und Erhalt einer Stellfunktion $\psi_2$, welche die der erkannten Störung entsprechenden Spannungswerte für die Aktuatoren des deformierbaren Spiegels 10 angibt.
- Gewichtung der von der Datenbank erhaltenen Stellfunktion $\psi_2$. Zur besseren Konvergenz des Verfahrens wird die gefundene Stellfunktion $(y_1, y_2, ..., y_M)_2$ mit einem Gewichtungsfaktor w, der größer als 0,1 und kleiner als 1 ist, multipliziert.
- Aufaddierung der gewichteten Stellfunktion auf die bisherige Stellfunktion des Stellgliedes unter Erhalt einer Summen-Stellfunktion.
- Beaufschlagung des Stellgliedes mit dieser Summen-Stellfunktion, wobei sich die Regelgröße entsprechend verändert.
- Erhalt neuer Sensordaten durch den Wellenfrontsensor 10, Eingabe dieser Sensordaten in das neuronale Netz, Erhalt einer neuen, als dominant erhaltenen Abweichungsfunktion durch das neuronale Netz, Erhalt einer neuen Stellfunktion aus der Datenbank, Gewichtung, Aufaddierung der gewichteten Stellfunktion und Beaufschlagung des Stellgliedes mit einer neuen Summen-Stellfunktion.
- Vielmalige Wiederholung der letztgenannten Schritte.

Nachfolgend ist ein Auszug der Datenbank aufgeführt. Daraus geht die Datenbankstruktur der zuvor dargestellten Regelungseinrichtung hervorgeht.

| Datenbank | | |
|---|---|---|
| Satznummer | Abweichungsfunktion $\phi$ | Stellfunktion $\psi$ |
| 1 | $\phi_1$->$(x_1, x_2, ..., x_N)_1$ | $\psi_1$->$(y_1, y_2, ..., y_M)_1$, Mode 1, Amplitude 10V |
| 2 | $\phi_2$->$(x_1, x_2, ..., x_N)_2$ | $\psi_2$->$(y_1, y_2, ..., y_M)_2$, Mode 1, Amplitude 20 V |
| ... | ... | ... |
| ... | ... | ... Mode 1, Amplitude 400 V |
| ... | ... | ... Mode 2, Amplitude 10 V |
| ... | ... | ... Mode 2, Amplitude 20 V |
| ... | ... | ... |
| ... | ... | ... Mode m, Amplitude 390 V |
| q | $\phi_q$->$(x_1, x_2, ..., x_N)_q$ | $\psi_q$->$(y_1, y_2, ..., y_M)_q$, Mode m, Amplitude 400 V |

Die Datenbankstruktur wird nachfolgend erläutert.

In der Datenbank ist zu Anfang die Satznummer q aufgeführt.

Die Abweichungsfunktion in der Form $\phi_q$->$(x_1, x_2, ..., x_N)_q$ ist der Vektor der bei Anlegen der zur Stellfunktion $\psi_q$ gehörenden Stellgliedfunktion gemessenen Punktverschiebungen des Wellenfrontsensors. Dies wurde zuvor an Hand der Fig. 2 im Rahmen der Datenbankgenerierung erläutert. Zwei x-Werte sind notwendig, um eine Punktverschiebung einer Zelle des Wellenfrontsensors zu definieren. Daher entspricht N/2 der Anzahl der Zellen des Wellenfrontsensors.

Die Stellfunktion $\psi$ in der Form $\psi_q$->$(y_1, y_2 ..., y_M)_q$ ist der Vektor, der die Spannungswerte für die einzelnen Aktuatoren M des deformierbaren Spiegels 10 angibt. Mit Mode m wird ein bestimmter, mechanischer Deformationsmode des deformierbaren Spiegels angegeben.

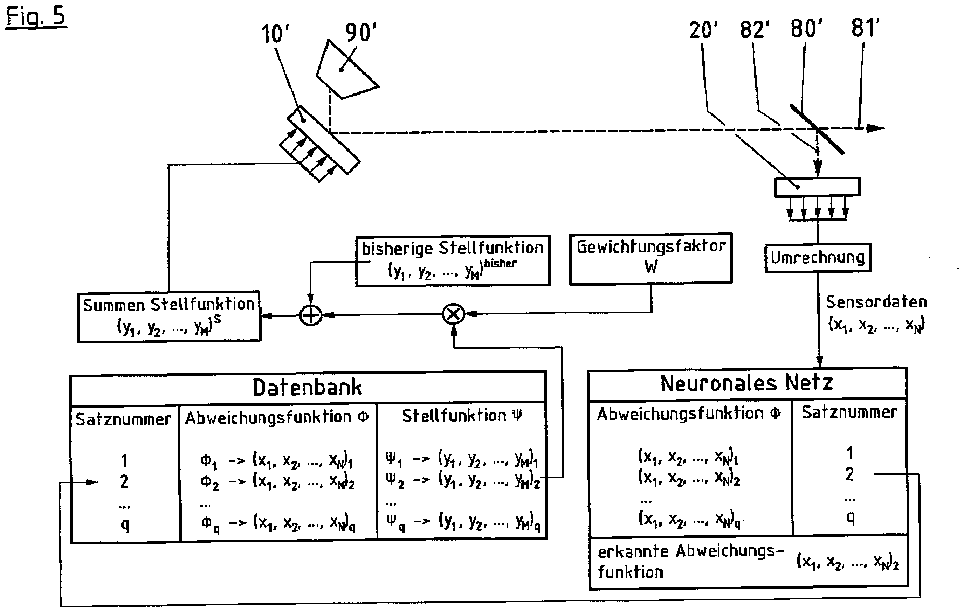

Die Fig. 5 illustriert eine zweite Anwendung auf dem Gebiet der adaptiven Optik. Die zweite Anwendung betrifft eine Regelung der Wellenfront erhaltener Teleskopstrahlen. Hierbei wird ein deformierbarer Spiegel 10' im Strahlengang zwischen einem Teleskop 90' und einer Anzeigevorrichtung angeordnet. Der verformbare Spiegel 10' ist das Stellglied zur Korrektur der Wellenfront.

Der Wellenfrontsensor 20' wird von einem Teilstrahl 82' des korrigierten Teleskopstrahls beaufschlagt. Um dies zu ermöglichen, ist ein Strahlteiler 80' vorgesehen. Der Hauptstrahl 81' des korrigierten Teleskopstrahls wird einer Anzeigevorrichtung zugeführt. Die Aufteilung in einen Teilstrahl 82' und einen Hauptstrahl 81' erfolgt in einem Verhältnis von 1:100.

Das Verfahren zu Regelung ist so, wie im Ausführungsbeispiel nach Fig. 4 beschrieben. Hinsichtlich der Einrichtung zur Regelung wird das gleiche neuronale Netz, verkörpert durch einen Chip, verwendet. Ebenso ist die Struktur der Datenbank gleich. Auf die Wellenfront wirken atmosphärische Störgrößen ein, die sich zeitlich sehr schnell verändern. Deshalb ist ein schneller Wellenfrontsensor 20' und ein schneller deformierbarer Spiegel 10' eingesetzt.

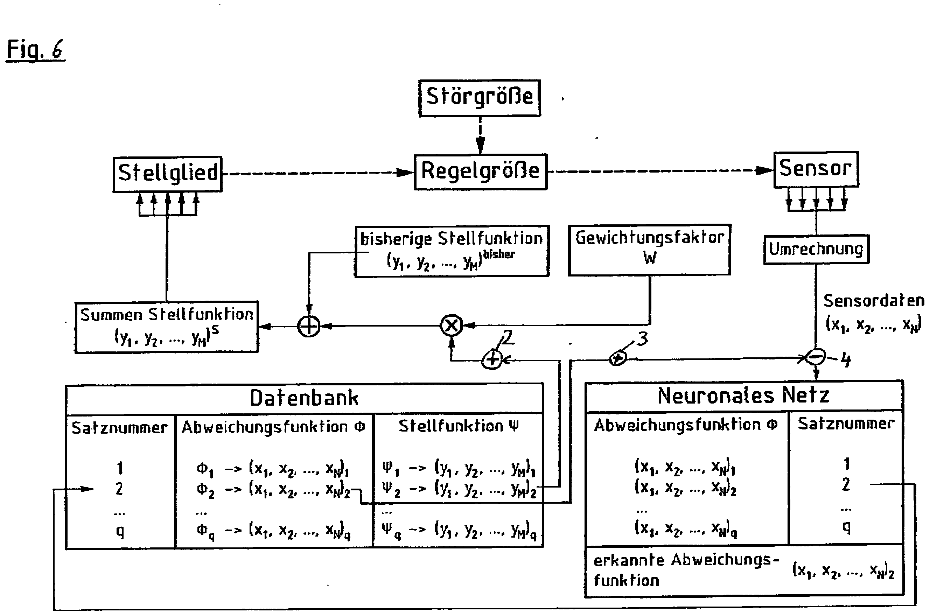

Die Fig. 6 illustriert eine Regelung für den Fall, dass eine Verarbeitungsgeschwindigkeit eines auf einem Chip basierenden, neuronalen Netzes ein Mehrfaches der Verarbeitungsgeschwindigkeit eines Sensors beträgt. Eine typische Zeitdauer für eine Generierung von Sensordaten kann in der Größenordnung von 10 ms liegen, wogegen eine typische Zeitdauer für eine Erkennung einer Abweichungsfunktion mit Hilfe eines auf einem Chip basierenden, neuronalen Netzes in der Größenordnung von 10 $\mu$s liegt.

Die Schritte a) bis e) des Anspruches 1 sind wie folgt als Schleife ausgebildet:

• Nach Erhalt der als dominant erkannten Abweichungsfunktion werden in Schritt d) Differenzdaten zu den vorhergegangenen Eingabedaten (bezogen auf Schritt a)) in das neuronale Netz gebildet. Mit den Differenzdaten werden die Schritte a) bis e) des Anspruches 1 erneut durchlaufen. In Fig. 6 ist ein entsprechender Differenzbildner 4 eingezeichnet.

• Mit jedem Schleifendurchgang werden eine neue Abweichungsfunktion und eine neue Stellfunktion erhalten. Die neue Abweichungsfunktion wird von den vorhergegangenen Eingabedaten in das neuronale Netz subtrahiert, Die neue Stellfunktion wird direkt mit der bisherigen Stellfunktion verrechnet und auf das Stellglied gegeben.

• Die Schleife wird maximal mit Differenzdaten nur so oft durchlaufen, solange noch keine neuen Sensordaten generiert sind.

• Nach einer Beendigung von Schleifendurchgängen wird im folgenden Schritt f) des Anspruches 1 fortgefahren.

In einem Schleifenbetrieb verändern sich Sensordaten nicht. In einem ersten Schleifendurchlauf erhält man mit Sensordaten eine erste, als dominant erkannte Abweichungsfunktion und eine entsprechende Stellfunktion. Während die Stellfunktion zum Stellglied hin direkt weiterverarbeitet wird, bildet man im Differenzbildner 4 Differenzdaten zwischen der erhaltenen Abweichungsfunktion und den vorangegangenen Eingabedaten in das neuronale Netz. Die vorangegangenen Eingabedaten sind noch die Sensordaten.

Mit diesen Differenzdaten wird die Schleife noch mal durchlaufen. Man erhält eine zweite Abweichungsfunktion und eine zweite Stellfunktion. Die zweite Stellfunktion wird ebenfalls direkt zum Stellglied hin verarbeitet und die zweite Abweichungsfunktion wird von den vorangegangenen Eingabedaten in das neuronale Netz, also den bisherigen Differenzdaten, subtrahiert.

Die nun am Stellglied anliegende, aktuelle Stellfunktion stellt eine verbesserte Antwort auf die Sensordaten dar. Mit den nach Subtraktion der Abweichungsfunktion von den vorherigen Differenzdaten erhaltenen aktuellen Differenzdaten kann ein neuer Schleifendurchlauf erfolgen.

Ist ein vorgebbares Abbruchkriterium erreicht, wird mit Schritt f) des Anspruches 1 fortgefahren. Ein Abbruchkriterium für die Schleife ist ein Zeitpunkt, zu dem neue Sensordaten vorliegen. Ein anderes Abbruchkriterien kann eine vorgegebene Anzahl von Schleifendurchgängen sein. Ein Unterschreiten von Werten von Differenzdaten könnte ebenso ein Verlassen der Schleife bewirken. Ähnlich zum Letzteren, jedoch etwas konkreter, könnte die Schleife auch dann abgebrochen werden, wenn als dominante Abweichungsfunktion die Null erkannt wird.

Bezugszeichenliste

| | |
|---|---|
| 4 | Differenzbildner |
| 10, 10' | deformierbarer Spiegel |
| 15 | Resonator-Auskoppelspiegel |
| 20, 20' | Wellenfrontsensor |
| 30 | Lasermedium |
| 40 | Auskoppelspiegel |
| 50' | Anzeigevorrichtung |
| 80, 80' | Stahlteiler |
| 81, 81' | Hauptstrahl |
| 82, 82' | Teilstrahl |
| 90' | Teleskop |

**Patentansprüche**

1. Verfahren zur Regelung einer Stellgröße unter Verwendung eines auf einem Chip basierenden, neuronalen Netzes, das an einen Sensor angeschlossen ist und Zugriff auf eine Datenbank hat, derart,

dass die Stellgröße mehrdimensional ist,

dass zeitabhängige Störgrößen auf die Regelgröße einwirkbar sind,

dass die Datenbank Sätze aufweist, wobei jeder Satz eine Satznummer, Werte einer Abweichungsfunktion und Werte einer Stellfunktion aufweist,

dass das neuronale Netz auf die Erkennung einer Abweichungsfunktion angelernt ist, mit folgenden Schritten im Regelungsbetrieb:

a) Eingabe von Sensordaten in das neuronale Netz,
b) Verarbeitung der Sensordaten im neuronalen Netz, derart, dass durch Erkennen, Klassifizieren und Verallgemeinern eine angelernte Abweichungsfunktion als dominant erkannt wird,
c) Ausgabe einer Satznummer der als dominant erkannten Abweichungsfunktion durch das neuronale Netz,
d) Abfrage der Datenbank mit der Satznummer der als dominant erkannten Abweichungsfunktion und Erhalt einer Stellfunktion, **gekennzeichnet durch** folgende Merkmale:
e) Aufaddierung dieser Stellfunktion auf eine bisherige Stellfunktion des Stellgliedes unter Erhalt einer Summen-Stellfunktion und Beaufschlagung des Stellgliedes mit dieser Summen-Stellfunktion, wobei sich die Regelgröße entsprechend verändert,
f) Erhalt neuer Sensordaten, Eingabe dieser Sensordaten in das neuronale Netz, Erhalt einer neuen, als dominant erkannten Abweichungsfunktion durch das neuronale Netz, Erhalt einer neuen Stellfunktion aus der Datenbank, Aufaddierung der Stellfunktion und Beaufschlagung des Stellgliedes mit einer neuen Summen-Stellfunktion, vielmalige Wiederholung.

2. Verfahren nach Anspruch 1, bei dem vor dem Schritt der Aufaddierung eine

   • Gewichtung der von der Datenbank erhaltenen Stellfunktion erfolgt.

3. Verfahren nach Anspruch 2, wobei die Gewichtung der von der Datenbank erhaltenen Stellfunktion durch eine Multiplikation mit einem Gewichtungsfaktor erfolgt.

4. Verfahren nach einem der Ansprüche 1 bis 3, bei dem die Schritte a) bis e) des Anspruches 1 derart als Schleife ausgebildet sind,

   • dass nach Erhalt der als dominant erkannten Abweichungsfunktion in Schritt d) Differenzdaten zu vorhergegangenen Eingabedaten in das neuronale Netz gebildet werden und mit den Differenzdaten die Schritte a) bis e) des Anspruches 1 erneut durchlaufen werden,
   • und dass die Schleife mit Differenzdaten maximal nur so oft durchlaufen wird, solange noch keine neuen Sensordaten generiert sind.

5. Verfahren nach einem der Ansprüche 1 bis 4, bei dem die Datenbank bei offener Regelschleife ohne einen Störgrößeneinfluss generiert wird, bevor ein Regelungsbetrieb stattfindet, mit folgenden Schritten:

   • Anlegung einer neuen Stellgliedfunktion an das Stellglied,
   • Erfassung von neuen Sensordaten, die einer Abweichungsfunktion entsprechen,
   • Eintrag der Abweichungsfunktion und einer zugehörigen, korrigierenden Stellfunktion, die durch eine Umrechnung der Stellgliedfunktion erhalten ist, in die Datenbank,
   • Wiederholung der vorgenannten Schritte.

6. Verfahren nach einem der Ansprüche 1 bis 5, bei dem nach einer Erstellung einer Datenbank und vor einem Regelungsbetrieb eine Anlernung des neuronalen Netzes mit folgenden Schritten erfolgt:

   • Auswahl eines Datensatzes der Datenbank,
   • Beaufschlagung des neuronalen Netzes zur Anlernung mit der abgespeicherten Abweichungsfunktion des ausgewählten Datensatzes und der Satznummer des ausgewählten Datensatzes,
   • Wiederholung der vorgenannten Schritte.

7. Verfahren nach einem der Ansprüche 1 bis 6, bei dem die Stellgröße eine Wellenfront, der Sensor ein Wellenfrontsensor (20, 20') und das Stellglied ein deformierbarer Spiegel (10, 10') sind.

8. Verfahren nach Anspruch 7, bei dem die Wellenfront eines Laserstahls geregelt wird und der deformierbare Spiegel (10) einer der beiden Spiegel eines Resonators eines Lasermediums (30) ist.

9. Verfahren nach Anspruch 8, bei dem der Wellenfrontsensor (20) von einem Teilstrahl (82) des aus dem Resonator austretenden Laserstrahls beaufschlagt wird.

10. Verfahren nach Anspruch 7, bei dem die Wellenfront erhaltener Teleskopstrahlen geregelt wird und der verformbare Spiegel (10') im Strahlengang zwischen Teleskop (90') und einer Anzeigevorrichtung angeordnet ist.

11. Verfahren nach Anspruch 10, bei dem der Wellenfrontsensor (20') von einem Teilstrahl (82') des korrigierten Teleskopstrahls beaufschlagt wird.

12. Einrichtung ausgebildet zur Durchführung des Verfahrens nach einem der Ansprüche 1 bis 11, zur Regelung einer Stellgröße, mit einem auf einem Chip basierenden, neuronalen Netz, das an einen Sensor angeschlossen ist und Zugriff auf eine in einem Speicher abgelegte Datenbank hat, derart,
    dass eine Interfaceschaltung

    • das neuronale Netz mit dem Sensor,
    • das neuronale Netz mit dem Speicher der Datenbank, und
    • den Speicher der Datenbank mit einem Stellglied miteinander verbindet, und

dass dadurch die Interfaceschaltung zur Durchführung des Verfahrens beiträgt.

**Claims**

1. Method for controlling a manipulated variable using a chip-based neuronal network connected to a sensor and having access to a database, in such a way,
   that the manipulated variable is multidimensional,
   that the time-dependent disturbance variables can have an effect on the controlled variable,
   that the database comprises records, each record comprising a record number, values of a deviation function and values of a control function,
   that the neuronal network is taught to recognize a deviation function, with the following steps in control mode:

   a) Input of sensor data into the neuronal network,
   b) processing the sensor data in the neuronal network, such that by recognizing, classifying and generalizing a learned deviation function is detected as dominant,
   c) Output of a record number of the deviation function recognized as dominant by the neuronal network,
   d) Query of the database with the record number of the deviation function recognized as dominant and receipt of a control function, **characterized by** the following features:
   e) Adding this control function to a previous control function of the actuator to obtain a sum control function and acting on the actuator with this sum control function, whereby the controlled variable changes accordingly,
   f) Obtaining of new sensor data, Input of these sensor data into the neuronal network, Obtaining a new deviation function recognized as dominant by the neuronal network, obtaining a new control function from the database, Addition of the control function and acting of the actuator with a new sum control function, multiple repetition.

2. Method according to claim 1, in which prior to the step of adding a

   • Weighting of the actuator function obtaining from the database takes place.

3. Method according to claim 2, wherein the weighting of the actuator function obtained from the database is performed by a multiplication by a weighting factor.

4. Method according to claim 1 to 3, wherein the steps a) to e) of claim 1 are formed in such a loop,

   • That after obtaining the deviation function recognized as dominant in step d), difference data to previous input data into the neuronal network are formed and with the difference data the steps a) to e) of claim 1 are run through again,
   • And that the loop with difference data is only run through as often as necessary, as long as no new sensor data has been generated.

5. Method according to claim 1 to 4, in which the database is generated with an open control loop without any disturbance variable influence, before a control mode takes place, with the following steps:

   • Apply a new actuator function to the actuator,
   • Acquisition of new sensor data that corresponds to a deviation function,
   • Entry of the deviation function and an associated, corrective actuator function, which is obtained by a conversion of the actuator function, into the database,
   • Repetition of the above steps.

6. Method according to claim 1 to 5, where, after a database has been created and before a control operation, a training of the neuronal network is carried out with the following steps:

   • Selection of a data record of the database,
   • Involvement of the neural network for learning with the stored deviation function of the selected data set and the record number of the selected record,
   • Repetition of the above steps.

7. Method according to claim 1 to 6, where the manipulated variable is a wavefront, the sensor is a wavefront sensor and the actuator is a deformable mirror.

8. Method according to claim 7, in which the wavefront of a laser beam is controlled and the deformable mirror is one of the two mirrors of a resonator of a laser medium.

9. Method according to claim 8, in which the wavefront sensor is acted upon by a partial beam of the laser beam emitted from the resonator.

10. Method according to claim 7, in which the wavefront of received telescope beams is controlled and the deformable mirror is arranged in the beam path between the telescope and a display device.

11. Method according to claim 10, in which the wavefront sensor is acted upon by a partial beam of the corrected telescope beam.

12. Device designed for carrying out the method according to claim 1 to 11, for controlling a manipulated variable, with a chip-based neuronal network, which is connected to a sensor and has access to a database stored in memory, in such a way that an interface circuit connects with each other

  • the neuronal network with the sensor,
  • the neuronal network with the memory of the database, and
  • the memory of the database with an actuator,
  and

  that thereby the interface circuit contributes to the implementation of the method.


**Revendications**

1. Procédé de réglage d'une variable manipulée à l'aide d'un réseau neuronal à base de puce, qui est connecté à un capteur et a accès à une base de données, **caractérisé en ce que**,
la variable manipulée est multidimensionnelle,
les grandeurs perturbatrices dépendantes du temps peuvent avoir un effet sur la grandeur réglée,
la base de données comprend des enregistrements, chaque enregistrement comprenant un numéro d'enregistrement, des valeurs d'une fonction d'écart et des valeurs d'une fonction d'actionnement,
on apprend au réseau neuronal à reconnaître une fonction de déviation, avec les étapes suivantes en mode de contrôle :

  a) Saisie des données des capteurs dans le réseau neuronal,
  b) traitement des données des capteurs dans le réseau neuronal, de telle sorte que, **en ce qu'**une fonction de déviation apprise est reconnue comme dominante par reconnaissance, classification et généralisation,
  c) délivrance d'un numéro d'enregistrement de la fonction de déviation détecté comme dominant par le réseau neuronal,
  d) interrogation de la base de données avec le numéro d'enregistrement de la fonction d'écart reconnue comme dominante et obtention d'une fonction de contrôle, **caractérisé par** les caractéristiques suivantes :
  e) ajout de cette fonction de contrôle à une fonction de contrôle précédente de l'élément de contrôle final tout en maintenant une fonction de contrôle total et actionnement de l'actionneur avec cette fonction de réglage de somme, où la variable contrôlée change en conséquence,
  f) obtention de nouvelles données de capteurs, entrée de ces données de capteurs dans le réseau neuronal, obtention d'une nouvelle fonction de déviation reconnue comme dominante par le réseau neuronal, obtention d'une nouvelle fonction de contrôle de la base de données, ajout de la fonction de contrôle et actionnement de l'actionneur avec une nouvelle fonction de réglage de somme, répétition multiple.

2. Procédé selon la revendication 1, **caractérisé en ce que**,

  • une pondération de la fonction de contrôle reçue de la base de données a lieu avant l'étape d'addition.

3. Procédé selon la revendication 2, **caractérisé en ce que** la pondération de la fonction de commande obtenue à partir de la base de données est effectuée par multiplication par un facteur de pondération.

**4.** Procédé selon l'une des revendications 1 à 3, **caractérisé en ce que** les étapes a) à e) de la revendication 1 sont formées en boucle de telle sorte que,

- après avoir obtenu la fonction de déviation reconnue comme dominante à l'étape d) les données de différence sont formées par rapport aux données d'entrée précédentes dans le réseau neuronal et les étapes a) à e) de la revendication 1 sont répétées avec les données de différence,
- et que la boucle avec données d'écart n'est parcourue qu'aussi souvent que nécessaire, tant qu'aucune nouvelle donnée de capteur n'a été générée.

**5.** Procédé selon l'une des revendications 1 à 4, **caractérisé en ce que** la base de données est générée avec une boucle de régulation ouverte sans influence de grandeur perturbatrice, avant qu'un mode de contrôle n'ait lieu, avec les étapes suivantes :

- application d'une nouvelle fonction d'actionneur à l'actionneur,
- acquisition de nouvelles données de capteur correspondant à une fonction de déviation,
- Saisie dans la base de données de la fonction de déviation et d'une fonction de contrôle corrective associée, que l'on obtient en convertissant la fonction de l'actionneur,
- Répétition des étapes ci-dessus.

**6.** Procédé selon l'une des revendications 1 à 5, **caractérisé en ce qu'**après la création d'une base de données et avant un mode de contrôle, un apprentissage du réseau neuronal a lieu selon les étapes suivantes :

- Sélection d'un enregistrement de données de la base de données,
- Application de la fonction de déviation mémorisée de l'ensemble de données sélectionné et du numéro d'enregistrement de l'ensemble de données sélectionné au réseau neuronal à des fins d'entraînement,
- Répétition des étapes ci-dessus.

**7.** Procédé selon l'une des revendications 1 à 6, **caractérisé en ce que** la variable manipulée est un front d'onde, le capteur est un capteur de front d'onde et l'actionneur est un miroir déformable.

**8.** Procédé selon la revendication 7, **caractérisé en ce que** le front d'onde d'un faisceau laser est commandé et le miroir déformable est l'un des deux miroirs d'un résonateur d'un milieu laser.

**9.** Procédé selon la revendication 8, **caractérisé en ce que** le capteur de front d'onde est sollicité par un faisceau partiel du faisceau laser émis par le résonateur.

**10.** Procédé selon la revendication 7, **caractérisé en ce que** le front d'onde des faisceaux télescopiques reçus est commandé et le miroir déformable est situé dans le trajet du faisceau entre le télescope et un dispositif d'affichage.

**11.** Procédé selon la revendication 10, **caractérisé en ce que** le capteur de front d'onde est sollicité par un faisceau partiel du faisceau corrigé du télescope.

**12.** Dispositif conçu pour la mise en œuvre de la méthode selon l'une des revendications 1 à 11, **caractérisé en ce que** la commande d'une variable manipulée, comportant un réseau neuronal basé sur une puce, est relié à un capteur et a accès à une base de données stockée dans une mémoire, de telle sorte qu'un circuit d'interface relie entre eux :

- le réseau neuronal avec le capteur,
- le réseau neuronal avec la mémoire de la base de données, et
- la mémoire de la base de données avec un actionneur

et

que le circuit d'interface contribue ainsi à la mise en œuvre du procédé.

Fig. 1

Fig. 2

Fig. 2

| Stellglied | | Regelgröße | | Sensor |
|---|---|---|---|---|

angelegte
Stellgliedfunktion q

Sensordaten
$(x_1, x_2, ..., x_N)_q$

Umrechnung

Umrechnung

| Datenbank | | |
|---|---|---|
| Satznummer | Abweichungsfunktion $\Phi$ | Stellfunktion $\Psi$ |
| 1 | $\Phi_1 \rightarrow (x_1, x_2, ..., x_N)_1$ | $\Psi_1 \rightarrow (y_1, y_2, ..., y_M)_1$ |
| 2 | $\Phi_2 \rightarrow (x_1, x_2, ..., x_N)_2$ | $\Psi_2 \rightarrow (y_1, y_2, ..., y_M)_2$ |
| ... | ... | ... |
| q | $\Phi_q \rightarrow (x_1, x_2, ..., x_N)_q$ | $\Psi_q \rightarrow (y_1, y_2, ..., y_M)_q$ |

EP 2 372 480 B1

Fig. 3

**Neuronales Netz**

| Abweichungsfunktion $\Phi$ | Satznummer |
|---|---|
| $(x_1, x_2, …, x_N)_1$ | 1 |
| $(x_1, x_2, …, x_N)_2$ | 2 |
| ... | ... |
| $(x_1, x_2, …, x_N)_q$ | q |

erkannte Abweichungsfunktion $(x_1, x_2, …, x_N)_2$

**Datenbank**

| Satznummer | Abweichungsfunktion $\Phi$ | Stellfunktion $\Psi$ |
|---|---|---|
| 1 | $\Phi_1 \rightarrow (x_1, x_2, …, x_N)_1$ | $\Psi_1 \rightarrow (y_1, y_2, …, y_M)_1$ |
| 2 | $\Phi_2 \rightarrow (x_1, x_2, …, x_N)_2$ | $\Psi_2 \rightarrow (y_1, y_2, …, y_M)_2$ |
| ... | ... | ... |
| q | $\Phi_q \rightarrow (x_1, x_2, …, x_N)_q$ | $\Psi_q \rightarrow (y_1, y_2, …, y_M)_q$ |

Fig. 4

10    30    15    20  82  80  81

bisherige Stellfunktion
$(y_1, y_2, ..., y_M)^{bisher}$

Gewichtungsfaktor
W

Umrechnung

Summen Stellfunktion
$(y_1, y_2, ..., y_M)^S$

Sensordaten
$(x_1, x_2, ..., x_N)$

| Datenbank | | |
|---|---|---|
| Satznummer | Abweichungsfunktion Φ | Stellfunktion Ψ |
| 1 | $\Phi_1 \rightarrow (x_1, x_2, ..., x_N)_1$ | $\Psi_1 \rightarrow (y_1, y_2, ..., y_M)_1$ |
| 2 | $\Phi_2 \rightarrow (x_1, x_2, ..., x_N)_2$ | $\Psi_2 \rightarrow (y_1, y_2, ..., y_M)_2$ |
| ... | ... | ... |
| q | $\Phi_q \rightarrow (x_1, x_2, ..., x_N)_q$ | $\Psi_q \rightarrow (y_1, y_2, ..., y_M)_q$ |

| Neuronales Netz | |
|---|---|
| Abweichungsfunktion Φ | Satznummer |
| $(x_1, x_2, ..., x_N)_1$ | 1 |
| $(x_1, x_2, ..., x_N)_2$ | 2 |
| ... | ... |
| $(x_1, x_2, ..., x_N)_q$ | q |
| erkannte Abweichungs-funktion | $(x_1, x_2, ..., x_N)_2$ |

EP 2 372 480 B1

Fig. 5

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CRISTINA ALVAZEZ DIEZ.** A 3-sided Pyramid Wavefront Sensor controlled by a Neutral Network for Adaptive Optics. Ruperto-Carola University of Heidelberg, 18. Oktober 2006

- A neural network based positional tracking controller for servo systems. **BOYAGODA et al.** CONFERENCE RECORD OF THE 1999 IEEE INDUSTRY APPLICATIONS CONFERENCE. THIRTY-FORTH IAS ANNUAL MEETING. IEEE, 2380-2385